(19) **Europäisches Patentamt**

**European Patent Office**

**Office européen des brevets**

(11) Veröffentlichungsnummer: **0 370 277**

**A2**

(12) # EUROPÄISCHE PATENTANMELDUNG

(21) Anmeldenummer: 89120222.8

(22) Anmeldetag: 31.10.89

(51) Int. Cl.5: **H04B  1/66**

(30) Priorität: 24.11.88 DE 3839706

(43) Veröffentlichungstag der Anmeldung:
**30.05.90 Patentblatt  90/22**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**D-8000 München 2(DE)**

(72) Erfinder: **Pexa, Günther**
**Brückenweg 2 a**
**D-8031 Wörthsee(DE)**

(54) **Subband-Übertragungssystem.**

(57) Das Frequenzband (FB) eines digitalen Tonsignals (TS) wird in einer Codiereinrichtung (CE) durch Quadratur-Mirror-Filter (QMF) in Subbänder (SB1 bis SB7) aufgeteilt, wobei in den einzelnen Verarbeitungszweigen Coder (C0) zur Datenreduktion vorgesehen sind. Im Signalzweig des Subbandes (SBH, SB7), in dem der höchste Frequenzbereich 12-24 kHz des Tonsignals (TS) übertragen wird, ist ein erstes Filter (F1) zur Bandbegrenzung 12-15 kHz und ein erster Taktratenkonverter (TC1) zur Reduzierung der Datenrate angeordnet. In einer empfangsseitigen Decodiereinrichtung wird aus den in den Subbändern (SB1 bis SB7) übertragenen Subbandsignale in weiteren Quadratur-Mirror-Filtern (QMF) ein bandbegrenztes Tonsignal (TSB) zusammengesetzt.

## FIG 1

EP 0 370 277 A2

# Subband-Übertragungssystem

Die Erfindung betrifft ein Subband-Übertragungssystem nach dem Oberbegriff des Patentanspruchs 1.

Digitale Subband-Übertragungssysteme ermöglichen unter Nutzung psychoakustischer Effekte die Übertragung von hochwertig erscheinenden Tonsignalen mit einer stark reduzierten Bitrate. Die Grundlage hierzu liefert der sogenannte Verdeckungseffekt, wie er beispielsweise in "Psychoakustik" von E. Zwicker, Springer Verlag, 1982 beschrieben ist. Hiernach werden in unmittelbarer Umgebung eines Tones frequenzmäßig benachbarte Töne oder Rauschen mit geringerem Pegel unhörbar. Dieser Effekt wird ausgenutzt, indem man den Frequenzbereich eines Tonsignals in Subbänder zerlegt und innerhalb der Subbänder eine Irrelevanzreduktion durchführt. Durch ein übliches Datenreduktionsverfahren kann die Datenrate noch weiter gesenkt werden.

Ein für Rundfunksignale realisiertes Übertragungssystem ist im Patent DE 34 40 613 beschrieben. Hier sind auch genaue theoretische Angaben zur Auslegung der einzelnen Signalwege zu entnehmen.

In "The Bell System Technical Journal", Vol. 60, Nr. 7, September 1981, Seiten 1633 bis 1653 ist das Prinzip eines digital arbeitenden Subband-Übertragungssystems beschrieben. Die Aufteilung des ursprünglichen Frequenzbandes erfolgt in einer sendeseitigen Codiereinrichtung mit Hilfe von Quadratur-Mirror-Filtern. Mit ihnen wird sendeseitig jeweils eine Halbierung des Frequenzbandes in zwei Teilbänder durchgeführt und empfangsseitig werden diese Teilbänder wieder zu einem einzigen Frequenzband zusammengesetzt. Der große Vorteil dieser Filter liegt in der Kompensation des Aliassignals, d. h. der Signale in einander überlappendem Frequenbereichen. Zur Irrelevanz- und Datenreduktion wird hier eine adaptiver DPCM-Codierer (Differenz-Pulscodemodulation) verwendet.

Bei einem realisiertem Subband-Übertragungssystem wird zunächst das Tonsignal mit der üblichen Frequenz von 48 kHz abgetastet.

Die Abtastrate wird zunächt verdoppelt, das so erzeugte Signal mit Hilfe eines digitalen Tiefpasses gefiltert und anschließend wird die Datenrate um ein Drittel auf 32 kHz reduziert. Bei diesem Verfahren ist nicht nur ein erheblicher Schaltungsaufwand erforderlich, es tritt auch eine erhebliche Laufzeit auf. Eine alternative Lösung mit einem analogen Tiefpaß benötigt ebenfalls einen erheblichen Schaltungsaufwand und ergibt ähnliche Laufzeitprobleme. Natürlich ist es auch möglich, daß zunächst in die Bandbreite des Signals zu begrenzen und anschließend das bandbegrenzte Signal mit einer geringeren Abtastfrequenz abzutasten. Dann werden aber besonders hohe Anforderungen an den analogen Tiefpaß gestellt.

Das Übertragungssystem sollte außerdem so konzipiert sein, daß auch bei größeren Änderungen des Frequenzganges eine hohe Tonqualität erhalten bleibt. Außerdem wirkt sich eine große Laufzeit besonders bei der Verarbeitung unterschiedlicher Tonsignale in einem Tonstudio störend aus.

Aufgabe der Erfindung ist es, ein Subband-Übertragungssystem mit geringer Laufzeit und geringem Schaltungsaufwand anzugeben. Das Übertragungssystem soll ferner auch für hochwertige Tonsignale konzipierbar sein.

Die Aufgabe wird durch die in Patentanspruch 1 angegebene Merkmale gelöst.

Vorteilhaft ist, daß aufwendige und damit kostspielige Filter nicht benötigt werden. Das zur Bandbegrenzung verwendete Filter arbeitet parallel zu den sonstigen Signalverarbeitungseinrichtungen und liefert somit keinen zusätzlichen Anteil zur Signallaufzeit, wie beispielsweise ein Tiefpaß, der einem Analog-Digital-Umsetzer vorgeschaltet ist, der ein analoges Tonsignal in das digitale Tonsignal umsetzt. Der Taktratenkonverter wird realisiert, indem jeweils nur jeder dritte Signalwert weiterverarbeitet wird, also praktisch ohne Schaltungsaufwand.

Das mit Hilfe der Codiereinrichtung gewonnene bandbegrenzte Tonsignal mit reduzierter Datenrate kann natürlich auch aufgezeichnet oder zwischengespeichert werden. Ebenso ist die Weiterverarbeitung in einem Tonstudio denkbar, bei der der eine Frequenzgangkorrektur innerhalb der einzelnen Subbänder erfolgt.

Als Frequenzweichen werden vorteilhaft Quadratur-Mirror-Filter verwendet, die mit relativ geringem Schaltungsaufwand realisierbar sind. Diese Filter können zur Aufteilung eines Frequenzbandes in Teilbänder oder zur Summation von Teilbändern verwendet werden, wobei Störungen durch Aliassignale vermieden werden. Zur Bandbegrenzung reicht ein einfaches Filter aus. Mit der Aufteilung eines Frequenzbandes in zwei Teilbänder wird jeweils die Datenrate halbiert. Im höchstfrequenten Subband erfolgt eine Reduktion der Datenrate durch einen Taktraten Konverter. Bevor die Subbandsignale als Zeitmultiplexsignale übertragen werden, erfolgt im allgemeinen in einer Codiereinrichtung eine weitere Datenreduktion. Diese kann beispielsweise lediglich durch eine den Erfordernissen angepaßte Quantisierung erfolgen. Häufig werden DPCM Coder verwendet, mit denen sowohl eine Irrelevanzreduktion als auch eine Redundanzreduktion durchgeführt wird. Empfangsseitig wird in einem Decoder das Subbandsignal wiederhergestellt und die Subbandsignale über Quadratur-
Mirror-Filter zum ursprünglichen Tonfrequenzsignal
zusammengefügt.

Ein Ausführungsbeispiel der Erfindung wird anhand von Figuren näher erläutert.

Es zeigen

Fig. 1 ein Prinzipschaltbild eines Subband-
Übertragungssystems und

Fig. 2 einen zugehörigen Frequenzplan.

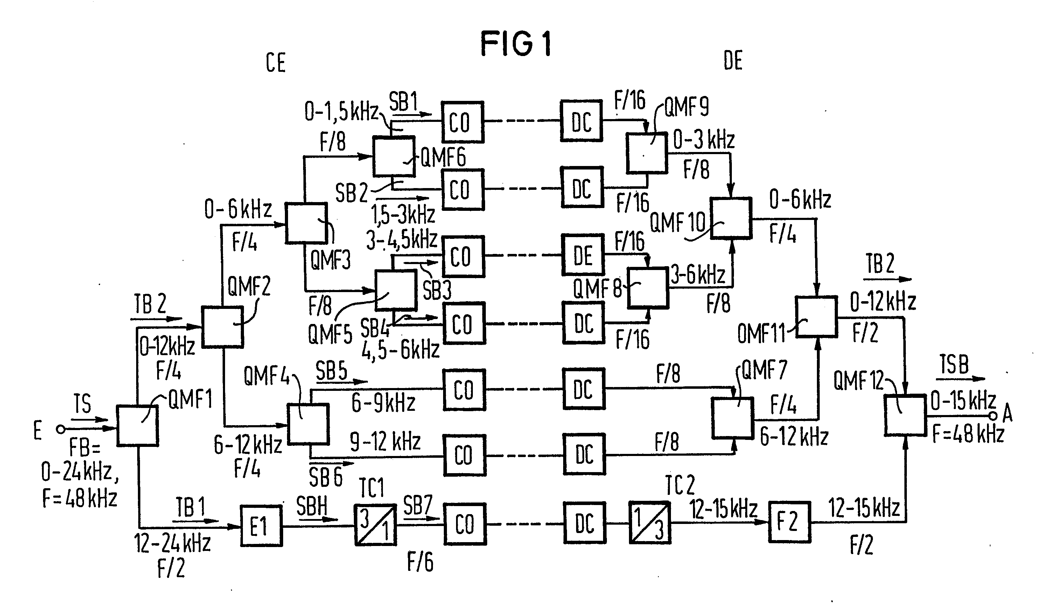

Das in Figur 1 dargestellte digitale Subband-
Übertragungssystem enthält nur die für die Erfindung wesentlichen Einrichtungen. Auf die Darstellung von Mittel zur Abtastung, Analog-Digital-und
Digital-Analog-Umsetzung sowie von Multiplex- und
Übertragungseinrichtungen wurde verzichtet. Einem
Digitaleingang E eines als Frequenzweiche wirkenden ersten Quadratur-Mirror-Filters QMF 1 (QM-
Filter 1) wird ein Tonsignal TS mit einem Frequenzband FB von beispielsweise 0 bis 24 kHz
und einer der üblichen Abtastfrequenz (F = 48
kHz) entsprechenden Datenraten von 48 kHz zugeführt.

Ein erster Ausgang des QM-Filters 1 ist mit der
Reihenschaltung eines ersten Filters F1 und eines
Taktratenkonverters TC1 verbunden. Der zweite
Ausgang des ersten QM-Filters QMF1 ist mit dem
Eingang eines zweiten QM-Filters QMF2 verbunden, dessen zwei Ausgänge mit den Eingängen
von weiteren QM-Filtern QMF3 und QMF4 verbunden sind. Die Ausgänge des dritten QMF-Filters
sind Eingängen von weiteren QMF-Filtern QMF5
und 6 zugeführt. In jedem Signalzweig eines Subbandes sind die Ausgänge des Taktratenkonverters
TC1 und der QMF-Filter QMF4, QMF5 und QMF6
mit jeweils einem Coder C0 verbunden. Die Ausgangssignale der Coder werden über eine nicht
dargestellte Übertragungseinrichtung, die sowohl
Multiplexer, Demultiplexer als auch Einrichtungen
zum Erzeugen der gewünschten elektrischen oder
optischen Signale enthält, zu einer Empfangseinrichtung übertragen. Diese ist der Sendeeinrichtung
entsprechend aufgebaut. Nach einem der Empfangsteil der Übertragungseinrichtung und einem
Demultiplexer ist für jeden Subband-Signalzweig
ein Decoder DC vorgesehen, deren Ausgänge
paarweise mit Eingängen von QM-Filter QMF7 bis
QMF9 verbunden sind. Die Ausgänge der QM-
Filter QMF8 und QMF9 sind über ein QM-Filter
QMF10 mit einem ersten Eingang eines QM-Filters
QMF11 verbunden, dessen zweiter Eingang der
Ausgang des QM-Filters QMF7 zugeführt ist. Im
höchstfrequenten Verarbeitungszweig schließt sich
an den Decoder die Reihenschaltung eines zweiten
Taktkonverters TC2 und eines zweiten Filters F2
an, dessen Ausgang einem weiteren QM-Filter
QMF12 zugeführt ist, dessen zweiter Eingang mit
dem Ausgang des QM-Filters QMF11 verbunden ist. Der Ausgang des QM-Filters 12 bildet den
Digitalausgang der Empfangseinrichtung.

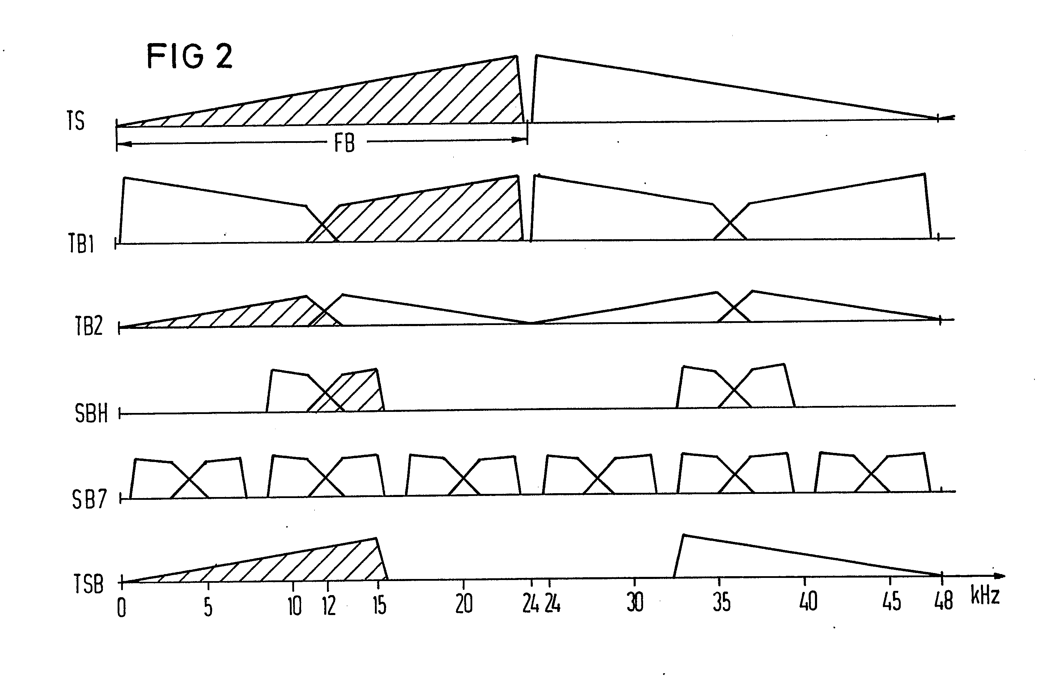

Enthält das am Digitaleingang anliegende Tonsignal ein Frequenzband FB von beispielsweise 0
bis 24 kHz, so wird dies durch das erste QM-Filter
QMF1 in zwei Teilbänder TB1 und TB2 zerlegt, die
12 bis 24 kHz bzw. 0 bis 12 kHz umfassen. Der
Einfachheit halber wird von einer Aufteilung des
Frequenzbandes FB in zwei Teilbänder TB1 und
TB2 gesprochen. Die Datenrate für jedes Teilbandsignal wird halbiert. Durch diese Halbierung
entstehen die in Figur 2 dargestellten einander
überlappenden Spektren des Teilbands TB1 bzw.
TB2. Die jeweilige Datenrate ist in Figur 1 in Bruchteilen der Abtastfrequenz angegeben. Durch das
erste Filter F1, das mit einer halben Abtasttaktrate
von 24 kHz arbeitet und seinem Prinzip nach einen
Hochpaß darstellt, wird das höchstfrequente Subband SBH, in dem die höherfrequenten Anteile des
Tonsignals übertragen werden, bandpaßmäßig selektiert. Das erste Filter hat einen Durchlaßbereich
von 9 kHz bis 15 kHz und selektiert Signale, die
den Frequenzbereich von 12 kHz bis 15 kHz umfassen. Der erste Taktratenkonverter TC1 reduziert
die Datenrate nochmals um zwei Drittel, ausgehend
von einer Abtastrate von 48 kHz also von 24 kHz
auf 8 kHz. Das hierdurch entstehende Spektrum
des siebten Subbandes SB7 ist ebenfalls in Figur 2
dargestellt. Das zweite Teilband TB2 wird über
jeweils zwei oder drei weitere QM-Filter QMF2 und
QMF4 oder QMF2, QMF3 und QMF5 bzw. QMF6
in die Subbänder SB1 bis SB6 zerlegt. In jedem
Subband-Signalzweig sorgt ein Coder C0 für eine
Datenreduktion, die entsprechend den psychoakkustischen Eigenschaften des menschlichen Hörsystems erfolgt und insbesondere die Quantisierung
der Daten bestimmt. Die datenreduzierten Subbandsignale werden über eine Multiplexeinrichtung
zusammengefaßt und zur Empfangseinrichtung
übertragen. Natürlich kann auch ein Coder im Zeitmultiplexbetrieb die Signale mehrer Subbänder
verarbeiten; auch kann beispielsweise im Subband
SB1 eine PCM-Codierung erfolgen.

In der Empfangseinrichtung erfolgt zunächst
durch eine Demultiplexeinrichtung die richtige Zuordnung der Daten zu den einzelnen Subband-
Signalzweigen. In Decodern werden die Subbandsignale wieder rekonstruiert und jeweils paarweise in
den QM-Filtern QMF7 bis QMF9 zusammengefaßt.
Anschließend werden die Teilbänder in den QM-
Filtern 10 und 11 zum Teilband TB2 zusammengesetzt. Durch die Verwendung von QM-Filtern ergeben sich durch die Aliassignale bei einander überlappenden Frequenzspektren keine Störungen.

Im höchstfrequenten Signalzweig der Decodiereinrichtung erfolgt nach der Decodierung zunächst
eine Taktratenkonversion. Die Datenrate wird wieder auf die Hälfte der Abtastrate also von 8 kHz auf 24 kHz, durch Zwischenschieben von Signalwerten der Größe null erhöht, und anschließend wird aus dem Spektrum des Subbandes SB7 das gewünschte Spektrum SBA durch das zweite Filter F2 herausgefiltert. Dieses Spektrum wird mit dem Spektrum des Teilbandes TB2 zu dem Tonsignal TSB im QM-Filter QMF12 zusammengesetzt. Auch das am Digitalausgang A abgegebene bandbegrenzte Tonsignal TSB kann in digitalen Tonstudions durch Anheben oder Absenken von Frequenzbereichen verändert werden, wenn bei der Aufteilung in Subbänder und bei der Datenreduktion diese Möglichkeit bereits berücksichtigt wurde. Bei dem in Figur 1 dargestellten SubbandÜbertragungssystem wurden für die tieferen Tonfrequenzen relativ schmale Subbänder gewählt, um noch günstige Verdeckungseffekte zu erzielen. Die Quantisierung bei den tiefen Frequenzen ist aufgrund des hier nicht so wirksamen Verdeckungseffekts relativ fein und nimmt bei höheren Frequenzen ab.

Die Codiereinrichtung und die Decodiereinrichtung können natürlich auch in Aufzeichnung bzw. Wiedergabegeräten verwendet werden.

Ansprüche

1. Digitales Subband-Übertragungssystem mit einer sendeseitigen Codiereinrichtung (SC), die digitale Frequenzweichen (QMF1 bis QMF6) zur Aufteilung des Frequenzbandes (FB) eines Tonsignals (TS) in mehrere Subbänder (SB1 bis SB7) sowie Signalzweigen der Subbänder (SB1 bis SB7) zugeordnete Coder (C0) zur Datenreduktion enthält, und mit Übertragungseinrichtungen, mit einer empfangsseitigen Decodiereinrichtung (DE) die den Signalzweigen der subbänder (SB1 bis SB7) zugeordnete Decoder (DC) enthält und mit Frequenzweichen (QMF7 bis QMF12) zur Zusammenfassung der Subbänder (SB1 bis SB7) zu den Frequenzband des Tonsignals,
**dadurch gekennzeichnet,**
daß in der Codiereinrichtung (CE) im Signalweg des Subbandes (SBH, SB7) mit dem höchsten Frequenzbereich (12-24 kHz) ein erstes Filter (F1) zur Bandbegrenzung und ein erster Taktratenkonverter zur Reduktion der Datenrate vorgesehen ist, daß in der Decodiereinrichtung (DE) im Signalzweig des Subbandes (SB7) mit dem höchsten Frequenzbereich (12-15 kHz) ein zweiter Taktratenkonverter (TC2) mit einer gegenüber den ersten Taktratenkonverter (TC1) inverser Funktion und ein zweites Filter zur Selektion des Hauptbereichs des bandbegrenzten Subband-Frequenzspektrums vorgesehen ist.

2. Codiereinrichtung nach dem Subband-Prinzip mit digitalen Frequenzweichen (QMF1 bis QMF7) zur Aufteilung des Frequenzbandes (FB) eines Tonsignals (TS) und mit Codern (C0) zur Datenreduktion, die Signalzweigen der Subbänder (SB1 bis SB7) zugeordnet sind,
**dadurch gekennzeichnet,**
daß die Codiereinrichtung (CE) im Signalzweig des Subbandes (SBH, SB7) mit dem höchsten Frequenzbereich (12-24 kHz) ein erstes Filter (F1) zur Bandbegrenzung und ein erster Taktratenkonverter (TC1) zur Reduktion der Datenrate vorgesehen ist.

3. Decodiereinrichtung nach dem Subband-Prinzip mit Decodern (DC), die Signalzweigen von Subbändern (SB1 bis SB7) zugeordnet sind, und mit Frequenzweichen (QMF7 bis QMF12) zum Zusammenfassen der Subbänder (SB1 bis SB7) zu einem Frequenzband eines bandbegrenzten Tonsignals (TSB).

4. Codiereinrichtung (CE) und Decodiereinrichtung (DE) nach einem der vorhergehenden Ansprüche,
**dadurch gekennzeichnet,**
daß als Frequenzweichen (QMF1 bis QMF12) Quadratur-Mirror-Filter vorgesehen sind.

5. Codiereinrichtung (CE) und Decodiereinrichtung (DE) nach einem der vorhergehenden Ansprüche,
**dadurch gekennzeichnet,**
daß als erstes Filter (F1) und/oder als zweites Filter (F2) ein Hochpaß vorgesehen ist.

6. Codiereinrichtung (CE) und Decodiereinrichtung (DE) nach einem der vorhergehenden Ansprüche,
**dadurch gekennzeichnet,**
daß das Tonsignal eine Abtastrate von 48 kHz aufweist und daß eine Datenrate von 32 kHz für die Subband-Signale vorgesehen ist.

7. Codiereinrichtung (CE) und Decodiereinrichtung (DE) nach einem der Ansprüche 1, 2, 4, 5 oder 6,
**dadurch gekennzeichnet,**
daß der im Signalzweig für das höchstfrequente Subband (SB7) vorgesehene erste Taktratenkonverter die Datenrate auf 8 kHz reduziert.

8. Codiereinrichtung (CE) und Decodiereinrichtung (DE) nach einem der vorhergehenden Ansprüche,
**dadurch gekennzeichnet,**
daß für den Frequenzbereich des Tonsignals (TS) von 0 bis 4 kHz vier Subbänder (SB1 bis SB4) vorgesehen sind.

9. Codiereinrichtung (CE) und Decodiereinrichtung (DE) nach einem der vorhergehenden Ansprüche,
**dadurch gekennzeichnet,**
daß für den Frequenzbereich des Tonsignals (TS) von 6 bis 12 kHz zwei Subbänder (SB5, SB6) vorgesehen sind.

10. Codiereinrichtung (CE) und Decodiereinrichtung (DE) nach einem der vorhergehenden Ansprüche,
**dadurch gekennzeichnet,**
daß als Coder (C0) und Decoder (DC) DPCM-Coder bzw. DPCM-Decoder vorgesehen sind.

FIG 1

FIG 2

EP 0 370 277 A2